# EUROPEAN PATENT APPLICATION

(11) **EP 4 368 501 A1**
(43) Date of publication of application: **15.05.2024**
(21) Application number: 22206907.2
(22) Date of filing: 11.11.2022
(51) Int. Cl.: B64C 23/06

(54) **ADJUSTABLE FLOW INFLUENCING ASSEMBLY FOR AN AIRCRAFT**

(71) Applicant: Airbus Operations GmbH, 21129 Hamburg (DE)
(72) Inventor: Stefes, Bruno, 21129 Hamburg (DE); Eberle, Adrian, 21129 Hamburg (DE); Reckzeh, Daniel, 21129 Hamburg (DE)
(74) Representative: LKGLOBAL Lorenz & Kopf Patentanwalt Attorney at Law PartG mbB

(57) **Abstract**

An adjustable flow influencing assembly for an aircraft is proposed, comprising an outer skin section of the aircraft, which has an external surface that is in contact with an air flow during operation of the aircraft, and an internal surface, at least one vortex generator body having a length and a width dimension, as well as a thickness, a positioning device arranged at the internal surface of the outer skin section, wherein the positioning device comprises a shaft rotatable about a rotational axis, wherein the at least one vortex generator body is arranged on the external surface and is coupled with the shaft, such that the rotational axis is substantially parallel to a plane spanned up by the length and width dimension of the at least one vortex generator body, and wherein the positioning device is adapted to rotate and arrest the at least one vortex generator body in a way that the orientation of the at least one vortex generator body relative to a main airflow direction on the exterior skin is selectively adjustable.

## Description

### Technical field

The invention relates to an adjustable flow influencing assembly for an aircraft, a method for influencing a flow at an aircraft as well as an aircraft having such an adjustable flow influencing assembly.

### Background of the invention

Modern commercial and transport aircraft often comprise an elaborate design that leads to a highly efficient aerodynamic behavior in various different flight conditions. One of many measures to increase the efficiency lies in the provision of local vortex generators, which are able to produce vortices locally for keeping an airflow attached to the aircraft outer surface, such as a wing surface, a rudder surface or the like. It is also well known to use movable vortex generators, which can be retracted to a neutral position in case they are temporarily not needed.

For example, DE 10 2007 027 697 B4 shows a fixed vortex generator assembly on an engine nacelle for improving the aerodynamic characteristics of the aircraft in particular in flight phases with larger angles of attack.

Likewise the deployment of spoilers at a wing surface to generate local flow separation is a well-known method for specific flight conditions, such as during a gust encounter, as a maneuver loads alleviation device, or for roll control and steep descent.

The installation of retractable vortex generators and spoilers is complex and increases the manufacturing and maintenance costs

### Summary of the invention

It is an object of the invention to propose an alternative flow influencing device that is simple to install and easy to maintain, while the manufacturing costs are reduced and the improvements of the aerodynamic effect are at least maintained.

This object is met by an adjustable flow influencing assembly for an aircraft having the features of independent claim 1. Advantageous embodiments and further improvements may be gathered from the subclaims and the following description.

An adjustable flow influencing assembly for an aircraft is proposed, comprising an outer skin section of the aircraft, which has an external surface that is in contact with an air flow during operation of the aircraft, and an internal surface, at least one vortex generator body having a length and a width dimension, as well as a thickness, at least one positioning device arranged at the internal surface of the outer skin section, wherein the at least one positioning device comprises a shaft rotatable about a rotational axis, wherein the at least one vortex generator body is arranged on the external surface and is coupled with the shaft, such that the rotational axis is substantially parallel to a plane spanned up by the length and width dimension of the at least one vortex generator body, and wherein the at least one positioning device is adapted to rotate and arrest the at least one vortex generator body in a way that the orientation of the at least one vortex generator body relative to a main airflow direction on the exterior skin is selectively adjustable.

A gist of the invention lies in providing a multi-purpose device, with which the functionality of a retractable vortex generator and of a retractable spoiler are combined. This opens the opportunity to use the same device in different ways, depending on the specific flight conditions of the aircraft at that moment. Hence, each vortex generator body may selectively act as a deployable vortex generator, for delaying or suppressing flow separation and hence lift enhancement for high or low speed conditions, potentially also for buffet control in high speed conditions. Also, the respective vortex generator may be used for management of flow induced separations causing vibrations or source noise. Also, each vortex generator body may act as a spoiler device to trigger flow separation in specific conditions, such as a load control device for sizing loads cases, but also potentially to increase emergency descent capabilities. In particular this may become more relevant for high aspect ratio wing design, in high altitude and high lift to drag ratio level, as well as for roll control when activating in an asymmetric way between a left and a right wing of an aircraft. Each of the vortex generator bodies, however, may be brought into a neutral position, in which it has a negligible impact on the outer flow and the corresponding aircraft drag, which will allow for increased geometrical dimensions of the devices, making the devices more effective.

The outer skin section of the aircraft may refer to any part of the aircraft that is external and thus is in contact with the airflow. It may be a part of an upper skin, a forward skin, or a bottom skin part of the wing; a boundary surface of a rudder; any part of a horizontal or vertical tail plane, of a fairing or the like.

The vortex generator body is an element that protrudes outwards from the outer skin section into the surrounding airflow. It always remains outside the outer skin section and is preferably slightly distanced to the external surface to avoid scratching the external surface when rotated. For example, a gap of 0.1 to 1 mm or slightly more may be provided between the vortex generator body and the external surface. The vortex generator body does not influence the airflow at all if it is aligned parallel to the main airflow direction. It may be a substantially flat body.

It may also be slightly curved and/or wedge-shaped. It may comprise a substantially rectangular shape in general, but may also have rounded corners and/or rounded edges. However, it may also have a tapered shape, a trapezoidal shape, a triangular shape, and/or a curved shape.

The at least one positioning device may be considered an actuator that actively rotates the vortex generator body to change its orientation relative to the main airflow direction. By this, the influence of the vortex generator body onto the airflow can be altered upon desire. For example, it may only be slightly rotated away from the neutral position to only produce vortices downstream the vortex generator body. However, by a stronger deflection relative to the main airflow direction, it may also act as a spoiler to actively trigger flow detachment.

The main airflow direction may correspond to a reference line on the external surface 6, which has an orientation that may change depending on the flight condition, including the velocity and the angle of attack. It is conceivable that the at least one positioning device comprises or is connected to a control unit that is capable of tracking the main airflow direction, such that the neutral position of the at least one vortex generator body automatically corresponds to the actual main airflow direction.

The at least one positioning device comprises a shaft that points to the outer skin section and, preferably, to an external side of the outer skin section. It may protrude through an opening in the outer skin section or it may end in the vicinity of such an opening before protruding through it. The vortex generator body is coupled with the shaft either directly or through another element arranged between the shaft and the vortex generator body.

It is conceivable, that the at least one positioning device is capable of not only rotating the vortex generator body into a desired rotation of position, but also to maintain this position. This may be conducted by providing the at least one positioning device as a step motor and/or having a reduction gear, which in combination with the motor can be dimensioned to exert a sufficient force onto the vortex generator body to compensate the aerodynamic forces acting onto the vortex generator body. However, also a separate arresting or locking device may be provided in addition to a motor. By simply providing a rotary motion, the assembly is simple and the shaft and/or the vortex generator body can easily be sealed against the outer skin section to avoid dirt and humidity to enter the at least one positioning device or the interior of the respective aircraft component. The design of the multi-purpose assembly makes it robust against adverse ambient conditions like snow, rain, or dust.

In an advantageous embodiment, the rotational axis is parallel to the width dimension and perpendicular to the length dimension of the vortex generator body. Thus, the longest side of the vortex generator body runs along the outer skin section, while the width dimension runs perpendicularly to the external surface. By providing the rotational axis to be parallel to the width dimension, the vortex generator body rotates about an axis that is parallel to the shortest side of the main vortex generator body surface.

In an exemplary embodiment, the vortex generator body and the at least one positioning device are arranged relative to each other in a way that the rotational axis extends along a center line that divides the at least one vortex generator body into two sections along the length dimension and that is parallel to the width dimension. By providing the rotational axis centrally on the at least one vortex generator body, the aerodynamic forces acting onto both sections create two opposing moments about the rotational axis, which cancel each other out. The required driving torque for moving the vortex generator body can thus be reduced without reducing the aerodynamic effect achieved by the vortex generator body.

In an exemplary embodiment, the at least one vortex generator body has a substantially constant thickness. The thickness may be as small as possible to reduce the impact on the airflow in the neutral position. The smallest possible thickness depends on the size of the vortex generator body, which should be a rigid component that effectively influences the flow in a desired way without having a tendency to flutter or bend. The thickness also depends on the used material and may be chosen by a skilled person. It is conceivable to use an aluminium alloy, titanium or CFRP.

In an exemplary embodiment, the at least one positioning device is adapted to rotate the shaft about 90 degrees at a maximum. In this position, the vortex generator body may be arranged perpendicularly to the main airflow direction. By limiting the degree of rotation, a simple design of a seal between the vortex generator body and the outer skin section is possible, since a seal body may only need to be deformed about 45°into two opposed directions, which may allow to use a simple and fixedly attached bellows.

In an exemplary embodiment, the at least one positioning device comprises an electric motor and a control unit. Thus, the at least one positioning device is simple to operate. The control unit may be connected to the electric motor and may exemplarily be coupled with a network or a bus of the aircraft to receive a command, which initiates a rotation of the at least one positioning device into a desired rotary position.

In an exemplary embodiment, the assembly is adapted to move the at least one vortex generator body into a first position corresponding to a neutral position that substantially does not influence the airflow, into a second position, in which the vortex generator body acts as a vortex generator and into a third position, in which the vortex generator body acts as a spoiler, wherein in the first position a main airflow direction and the vortex generator body enclose an angle of substantially 0°, wherein in the second position the main airflow direction and the vortex generator body enclose an angle in a range of 15° to 45° and preferably of 20° to 30°, and wherein in the third position the main airflow direction and the vortex generator body enclose an angle of substantially 90°. Aligning the vortex generator body parallel to the main airflow direction results in having the smallest possible front surface, which has an area that equals the thickness of the vortex generator body multiplied with the width of the vortex generator body. When the vortex generator body is a flat component, the airflow is substantially not influenced in the first position, which may also be referred to as the neutral position. In the second position, the vortex generator body only slightly extends into the main airflow, which is deflected along the vortex generator body and form vortices downstream the vortex generator body. However, in the third position, the main airflow directly impinges perpendicularly to the vortex generator body and thus is strongly influenced.

In an advantageous embodiment, the assembly comprises a plurality of vortex generator bodies arranged at a distance to each other, which are couplable with the at least one positioning device. Thus, extended local regions may be equipped with flow influencing vortex generator bodies, which may be moved synchronously or in groups, depending on the local flow conditions and the required effect of the assembly according to the invention.

In an advantageous embodiment, at least one first group of the vortex generator bodies is movable independently from at least one second group of the vortex generator bodies. Thus, only a part of the vortex generator bodies may be moved at the same time, if desired. For example, every second or every vortex generator body may be moved or only a half or a third of the vortex generator bodies may be moved at the same time in certain conditions.

In an advantageous embodiment, the assembly further comprises at least one flow sensor arrangeable on the external surface and couplable with the at least one positioning device, wherein the at least one flow sensor is adapted to measure at least one flow parameter on the external surface, and wherein the positioning device is adapted to move the at least one vortex generator body to influence the airflow upon receiving predetermined sensor data from the at least one flow sensor. In general, the control of the assembly may or should be carried out by a flight computer of the aircraft. Using local flow sensors installed near to the at least one vortex generator body would provide for example information about the area or extent of flow separation on the respective aircraft component, such as the wing. As a result, vortex generators may be activated to prevent a flow separation. This may also include selecting a suitable number of vortex generator bodies to be moved, if several vortex generator bodies are present.

It is also conceivable that a part of the vortex generator bodies, if several vortex generator bodies are installed, may act as a spoiler, wherein another part of the vortex generator bodies may act as a vortex generator, in certain temporal flow conditions and depending on the position of the installation at the aircraft.

In analogy to the above, the invention further relates to a method for influencing an airflow on an outer skin section of an aircraft, the outer skin section having an external surface and an internal surface, wherein at least one vortex generator body is arranged on the external surface and is coupled with a shaft of a positioning device arranged at the internal surface of the outer skin section and comprising a rotational axis, wherein the rotational axis is substantially parallel to a plane spanned up by a length and width dimension of the vortex generator body, the method comprising rotating the vortex generator body into a first position, in which the vortex generator body is parallel to a main flow direction for temporarily not influencing the flow, and rotating the vortex generator body into at least one other position, in which the main flow direction and the vortex generator body enclose an angle larger than zero for temporarily influencing the flow.

In an advantageous embodiment, the at least one other position comprises a second position, in which the main airflow direction and the vortex generator body enclose an angle in a range of 15° to 45° and preferably of 20° to 30° to let the at least one vortex generator body act as a vortex generator, and wherein the at least one other position comprises a third position in which the main airflow direction and the vortex generator body enclose an angle of substantially 90° to let the at least one vortex generator body act as a spoiler.

In an advantageous embodiment, the method further comprises measuring at least one flow parameter on the external surface through at least one flow sensor arranged on the external surface, and moving the at least one vortex generator body to influence the airflow upon receiving predetermined sensor data from the at least one flow sensor.

Still further, the invention relates to an aircraft, comprising at least one adjustable flow influencing assembly according to the above.

In an advantageous embodiment, the at least one adjustable flow influencing assembly is arranged on at least one position of a group of positions, the group comprising a wing in general, a forward region of a wing, an outboard portion of a wing, a vertical tail plane, a horizontal tail plane, a fairing, an engine nacelle, and a fuselage.

### Brief description of the figures

In the following, the attached drawings are used to illustrate exemplary embodiments in more detail. The illustrations are schematic and not to scale. Identical reference numerals refer to identical or similar elements. They show:
Fig. 1 shows a schematical sectional view of an adjustable flow influencing assembly.
Fig. 2 shows a schematical top view of the assembly of Fig. 1.
Fig. 3a and 3b show sectional views of a wing having an assembly with a vortex generator body in a first position (Fig 3a) and a third position (Fig. 3b).
Fig. 4 shows a top view of a wing having a plurality of vortex generator bodies in first and third positions.
Fig. 5a and 5b show sectional views of a wing having an assembly with a vortex generator body in a first position (Fig 5a) and a second position (Fig. 5b) at high angles of attack.
Fig. 6 shows a top view of a wing having a plurality of vortex generator bodies in first and second positions.
Fig. 7 shows a shock-induced flow separation on a wing in a schematical lateral view.
Fig. 8 shows an assembly in a top view having a plurality of vortex generator bodies.
Fig. 9 shows an aircraft.

### Detailed description of exemplary embodiments

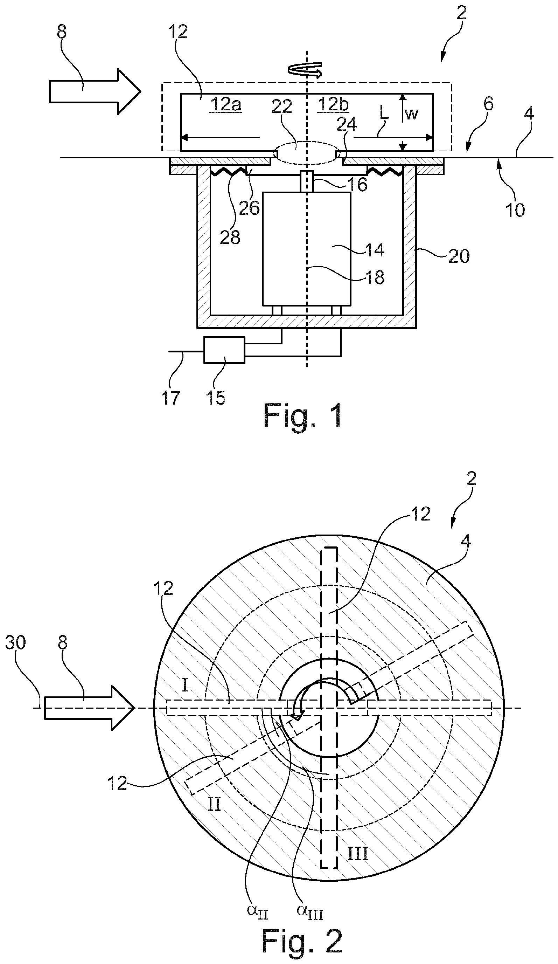

Fig. 1 shows an adjustable flow influencing assembly 2 for an aircraft. The assembly 2 comprises an outer skin section 4, which may be a part of the aircraft and is to be understood as a skin section on an outermost location of the aircraft, such as a part of the fuselage, of a wing, a horizontal tail plane, a vertical tail plane or a fairing on the outside of the aircraft. The outer skin section comprises an external surface 6, which is in contact with an airflow 8 during operation of the aircraft. The outer skin section 4 furthermore comprises an internal surface 10, which is most likely shielded from the airflow 8.

An exemplarily flat vortex generator body 12 is provided, which is arranged slightly above the external surface 6 and comprises a length dimension I and a width dimension w. In the present exemplary embodiment, the vortex generator body 12 perpendicularly extends to the external surface 6, such that the width dimension w extends perpendicularly to the external surface 6 and such that the length dimension I extends parallel to a local tangential surface of the external surface 6.

A positioning device 14 is provided in the form of an electric motor having a shaft 16, to which the vortex generator body 12 is coupled. The positioning device 14 furthermore exemplarily comprises a control unit 15, which has an input 17 to receive commands through a bus or network from a flight control computer. The control unit 15 is capable of controlling the positioning device 14 to move the vortex generator body 12 into a desired position given by the flight control computer depending on the actual flight conditions.

The shaft 16 comprises a rotational axis 18 and resultantly, the vortex generator body 12 can be rotated through the shaft 16. In this exemplary embodiment, the rotational axis 18 extends substantially parallel to the width dimension w and divides the vortex generator body 12 into two sections 12a and 12b along the lengthwise dimension w. Thus, the rotational axis 18 runs parallel to the plane spanned up by the lengthwise widthwise dimensions. By rotating the shaft 16, the vortex generator body 12 can selectively be brought into different orientations relative to the main airflow 8 to selectively influence the air flow over the outer skin section 4.

Exemplarily, the positioning device 14 is enclosed by a housing 20, which also acts as a mechanical support. The housing 20 is attached to the internal side 10 of the outer skin section 4, exemplarily by gluing, welding, riveting, or any other suitable attachment process depending on the material of the outer skin section 4. Preferably, the material of the enclosure 20 corresponds to the material of the outer skin section 4 to avoid different thermal engine behaviors.

Exemplarily, the vortex generator body 12 comprises a constriction 22 directly above an opening 24. A disk-like body 26 is connected to the shaft 16 and carries the vortex generator body 12 at the constriction 22. The disk-like body 26 is radially connected to a seal 28, which in turn is connected to the housing 20 or, alternatively, to the internal surface 10, for sealing the opening 24. It is conceivable, that the positioning device 14 is able to rotate about an angle of only up to 90°. The seal 28 may thus be realized by an elastic bellows that is fixedly connected to both the disk-like body 26 and the housing 20.

The vortex generator body 12 is a multifunctional device and can act as a vortex generator for delaying or suppressing flow separation or as a spoiler to trigger flow separation upon assuming a suitable orientation relative to the main airflow eight. This is shown in several following examples.

Fig. 2 shows the assembly 2 in a top view of the outer skin section 4. Here, the main airflow 8 is shown to run from the left-hand side to the right hand side in the viewing direction. The vortex generator body 12 is shown in three distinct and different positions I, II and III. Position I shows the vortex generator body 12 aligned parallel to a main flow direction 30 of the main airflow 8 and thus resembles a position of minimum impact. Thus, in this position, the vortex generator body 12 does not influence the airflow 8 on the aircraft outer skin section 4. In position II, the vortex generator body 12 and the main flow direction 30 enclose an angle α of about 30°. In this, the vortex generator body 12 acts as a vortex generator creating vortices on the external surface 6 downstream the vortex generator body 12. In position III, the vortex generator body 12 and the main flow direction 30 enclose an angle α of about 90° and thus acts as a spoiler to trigger flow separation locally.

It is to be understood, that the positioning device 14 is capable of not only moving vortex generator bodies 12 into the different positions one, two and three, but is also capable of holding the vortex generator bodies 12 there. For this, the positioning device 14 may include a locking device, which is not shown herein. The positioning device 14 may also comprise a reduction gear that in combination with the electric motor itself is sufficient to lock the vortex generator body 12 in each of the assumed positions.

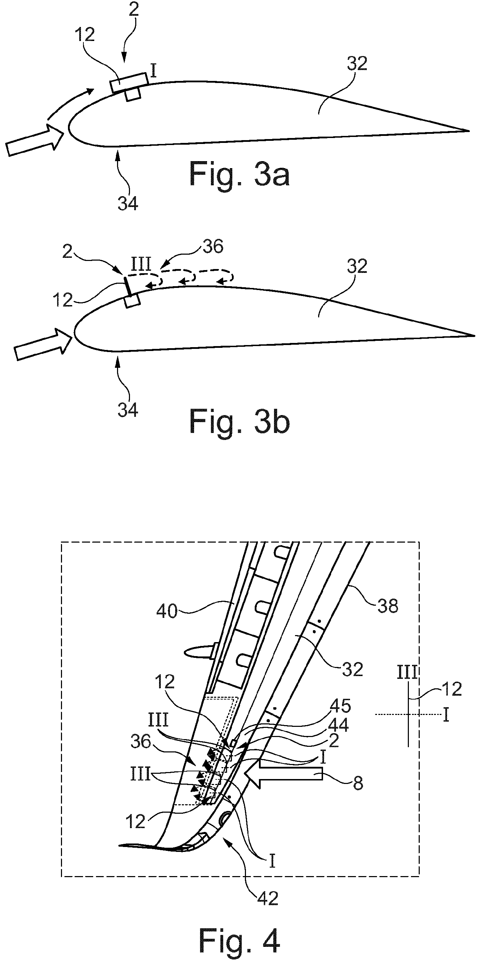

In figs. 3a and 3b a schematic sectional view of an aircraft wing 32 is shown, wherein the assembly 2 is arranged in forward part 34 of the wing 32 on an upper side of the wing 32. However, many other positions are conceivable. In fig. 3a, the vortex generator body 12 of the assembly 2 is in the neutral position, i.e. position I, which resembles the position of minimum impact. Thus, in this state, the flow over the wing 32 is substantially undisturbed. It is conceivable that the control unit 15 or the flight control computer connected to the control unit 15 is capable of actively determining the actual main airflow direction to actively moving the vortex generator body 12 into the actual main airflow direction, which may change depending on the flight conditions.

In fig. 3b, the vortex generator body 12 is in position III, such that it acts as a spoiler. Here, a local flow separation is triggered downstream the vortex generator body 12. For example, this may be provided when flow conditions would arise which would increase a local load on the wing 32 above an allowed value. Also, this position would contribute to an emergency descent capability and steep descent approaches. Still further, this position could be activated on one side of the wing only in order to introduce a rolling moment for enhanced roll control by inducing flow separation at the outer wing.

Fig. 4 shows a top view of the wing 32. Here, an outer part 36 of the wing 32 is shown, which comprises a leading edge 38, a trailing edge 40, a wingtip device 42 and an outboard portion 44 adjacent to the wingtip device 42 in a spanwise direction. Here, exemplarily a plurality of adjustable flow influencing assemblies 2 are shown, with vortex generator bodies 12 in neutral positions I or spoiler positions III. If the vortex generator bodies 12 are moved to position III, locally downstream the vortex generator bodies 12 a flow detachment is triggered, for inducing a rolling moment or for a local load control. Exemplarily, a flow sensor 45 is provided that is capable of determining a local flow condition, which may be fed to a flight control computer and/or to a control unit 15 to move the vortex generator bodies 12 depending on the measured flow condition.

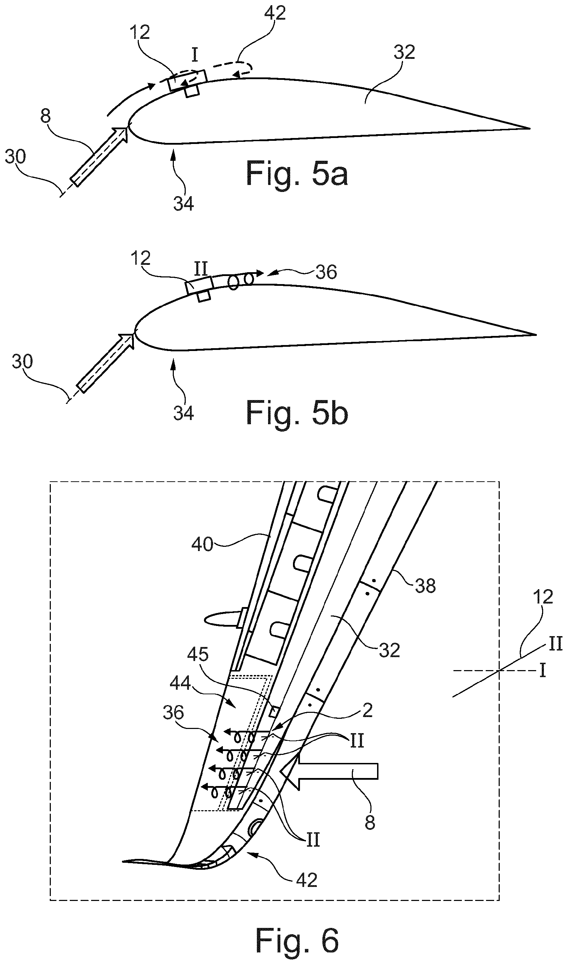

In figs 5a and 5b, the wing 32 is shown with the main airflow 8 coming from a flow direction 30 that represents a high angle of attack of the wing 32. With the vortex generator body 12 in the neutral position I, as shown in Fig. 5a, the airflow 8 detach in the forward region 34 of the wing 32. This is illustrated by dashed lines presenting a detached flow 42. To delay the flow separation, fig. 5b shows the vortex generator bodies 12 in position II, leading to the creation of vortices 36 that lead to reattaching the flow or delaying the flow separation, respectively.

This is further shown in a top view on the wing 32 illustrated in fig. 6, which is shown in analogy to fig. 4. Here, the vortex generator bodies 12 are shown in the positions II to delay a flow separation in the outboard portion 44.

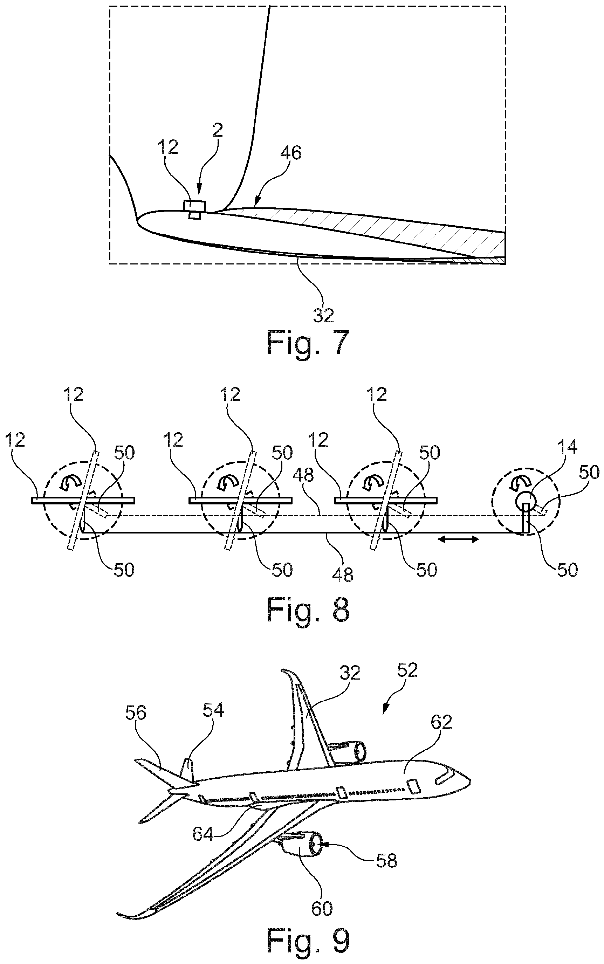

The assembly 2 may also be activated for a buffet control, as shown in fig. 7. Here, a shock induced flow separation 46 is illustrated, which can be attenuated by moving the vortex generator bodies 12 into position II.

Fig. 8 exemplary shows the connection of several vortex generator bodies 12 with a single electric motor 14 through a push rod 48 coupled with the vortex generator bodies 12 through a lever arm 50 each.

Finally, fig. 9 shows an aircraft 52 having wings 32, a horizontal tail plane 54, a vertical tail plane 56, engines 58 surrounded by engine nacelles 60, a fuselage 62 and a belly fairing 64. An assembly 2 according to the above may be placed at any suitable position of the aircraft 52, which may include the fuselage 62, the wings 32, the tail planes 54 and 56, the belly fairing 64, the engine nacelles 60 or any other component that is not explicitly mentioned herein, if it appears to be useful.

### Reference numerals

- 2: adjustable flow influencing assembly
- 4: outer skin section
- 6: external surface
- 8: airflow
- 10: internal surface
- 12: vortex generator body
- 12a, 12b: sections of a vortex generator body
- 14: positioning device
- 15: control unit
- 16: shaft
- 17: input
- 18: rotational axis
- 20: housing
- 22: constriction
- 24: opening
- 26: disk-like body
- 28: seal
- 30: main flow direction
- 32: aircraft wing
- 34: forward part
- 36: outer part
- 38: leading edge
- 40: trailing edge
- 42: wingtip device
- 44: outboard portion
- 45: flow sensor
- 46: shock induced flow separation
- 48: push rod
- 50: lever arm
- 52: aircraft
- 54: horizontal tail plane
- 56: vertical tail plane
- 58: engine
- 60: engine nacelle
- 62: fuselage
- 64: belly fairing

- I: length dimension
- w: width dimension
- α: angle

## Claims

1. Adjustable flow influencing assembly (2) for an aircraft (52), comprising:
an outer skin section (4) of the aircraft (52), which has an external surface (6) that is in contact with an airflow (8) during operation of the aircraft (52), and an internal surface (10),
at least one vortex generator body (12) having a length (I) and a width (w) dimension, as well as a thickness,
at least one positioning device (14) arranged at the internal surface (10) of the outer skin section (4),
wherein the at least one positioning device (14) comprises a shaft (16) rotatable about a rotational axis (18),
wherein the at least one vortex generator body (12) is arranged on the external surface (6) and is coupled with the shaft (16), such that the rotational axis (18) is substantially parallel to a plane spanned up by the length (I) and width (w) dimension of the at least one vortex generator body (12), and
wherein the at least one positioning device (14) is adapted to rotate and arrest the at least one vortex generator body (12) in a way that the orientation of the at least one vortex generator body (12) relative to a main airflow direction (30) on the exterior skin is selectively adjustable.

2. The assembly (2) of claim 1,
wherein the rotational axis (18) is parallel to the width (w) dimension and perpendicular to the length (I) dimension of the at least one vortex generator body (12).

3. The assembly (2) of claim 1 or 2,
wherein the at least one vortex generator body (12) and the at least one positioning device (14) are arranged relative to each other in a way that the rotational axis (18) extends along a center line that divides the at least one vortex generator body (12) into two sections (12a, 12b) along the length (I) dimension and that is parallel to the width (w) dimension.

4. The assembly (2) of any of the preceding claims,
wherein the at least one vortex generator body (12) has a substantially constant thickness.

5. The assembly (2) of any of the preceding claims,
wherein the at least one positioning device (14) is adapted to rotate the shaft (16) about 90 degrees at a maximum.

6. The assembly (2) of any of the preceding claims,
wherein the at least one positioning device (14) comprises an electric motor and a control unit (15).

7. The assembly (2) of any of the preceding claims,
wherein the assembly (2) is adapted to move the at least one vortex generator body (12) into a first position (I) corresponding to a neutral position that substantially does not influence the airflow (8), into a second position (II), in which the at least one vortex generator body (12) acts as a vortex generator and into a third position (III), in which the at least one vortex generator body (12) acts as a spoiler,
wherein in the first position (I) the main airflow direction (30) and the at least one vortex generator body (12) enclose an angle (a) of substantially 0°,
wherein in the second position (II) the main airflow direction (30) and the at least one vortex generator body (12) enclose an angle (a) in a range of 15° to 45° and preferably of 20° to 30°, and
wherein in the third position (III) the main airflow direction (30) and the at least one vortex generator body (12) enclose an angle (a) of substantially 90°.

8. The assembly (2) of any of the preceding claims,
comprising a plurality of vortex generator bodies (12) arranged at a distance to each other, which are couplable with the at least one positioning device (14).

9. The assembly (2) of claim 8,
wherein at least one first group of the vortex generator bodies (12) is movable independent from at least one second group of the vortex generator bodies (12).

10. The assembly (2) of any of the preceding claims,
further comprising at least one flow sensor (45) arrangeable on the external surface (6) and couplable with the at least one positioning device (14),
wherein the at least one flow sensor (45) is adapted to measure at least one flow parameter on the external surface (6), and
wherein the at least one positioning device (14) is adapted to move the at least one vortex generator body (12) to influence the airflow upon receiving predetermined sensor data from the at least one flow sensor (45).

11. Method for influencing an airflow on an outer skin section (4) of an aircraft (52), the outer skin section (4) having an external surface (6) and an internal surface (10), wherein at least one vortex generator body (12) is arranged on the external surface (6) and is coupled with a shaft (16) of at least one positioning device (14) arranged at the internal surface (10) of the outer skin section (4) and comprising a rotational axis (18), wherein the rotational axis (18) is substantially parallel to a plane spanned up by a length (I) and width (w) dimension of the at least one vortex generator body (12), the method comprising:
rotating the at least one vortex generator body (12) into a first position (I), in which the at least one vortex generator body (12) is parallel to a main flow direction (30) for temporarily not influencing the flow (8), and
rotating the at least one vortex generator body (12) into at least one other position (II, III), in which the main flow direction (30) and the at least one vortex generator body (12) enclose an angle (a) larger than zero for temporarily influencing the flow (8).

12. The method of claim 11,
wherein the at least one other position (II, III) comprises a second position (II), in which the main airflow direction (30) and the at least one vortex generator body (12) enclose an angle (a) in a range of 15° to 45° and preferably of 20° to 30° to let the at least one vortex generator body (12) act as a vortex generator, and
wherein the at least one other position (II, III) comprises a third position (III) in which the main airflow direction (30) and the at least one vortex generator body (12) enclose an angle (a) of substantially 90° to let the at least one vortex generator body (12) act as a spoiler.

13. The method of claim 11 or 12,
further comprising measuring at least one flow parameter on the external surface (6) through at least one flow sensor (45) arranged on the external surface (6), and
moving the at least one vortex generator body (12) to influence the airflow (8) upon receiving predetermined sensor data from the at least one flow sensor (45).

14. Aircraft (52), comprising at least one adjustable flow influencing assembly (2) according to any of the claims 1 to 10.

15. Aircraft (52) according to claim 14, wherein the at least one adjustable flow influencing assembly (2) is arranged on at least one position of a group of positions, the group comprising:
- a wing (32) in general,
- a forward region (34) of a wing,
- an outboard portion (44) of a wing,
- a vertical tail plane (56),
- a horizontal tail plane (54),
- a fairing (64),
- an engine nacelle (60), and
- a fuselage (62).
